# FASCICULE DE BREVET EUROPEEN

(11) **EP 2 042 413 B1**
(45) Date de publication et mention de la délivrance du brevet: **30.06.2010**
(21) Numéro de dépôt: 08163688.8
(22) Date de dépôt: 04.09.2008
(51) Int. Cl.: B62D 65/16, B62D 25/16

(54) **Véhicule automobile a jeux et affleurements réduits.**
Kraftfahrzeug mit reduziertem Spiel und reduzierter Unflucht
Automobile with reduced clearance and flushing.

(30) Priorité: 25.09.2007 FR 0757830
(43) Date de publication de la demande: 01.04.2009
(73) Titulaire: Peugeot Citroën Automobiles SA, 78140 Vélizy-Villacoublay (FR)
(72) Inventeur: Eckert, Christelle, 90300 La Chapelle Sous Chaux (FR)
(74) Mandataire: Allain, Laurent

(56) Documents cités:
- EP-A- 1 232 932
- EP-A- 1 481 878
- EP-A- 1 491 401

## Description

L'invention concerne en général les véhicules automobiles, notamment les moyens pour garantir les jeux et affleurements entre le capot et les ailes avant de ces véhicules.

Plus précisément, l'invention concerne selon un premier aspect un véhicule automobile comprenant :
- une caisse ;
- au moins un élément de support latéral rigide lié à la caisse ;
- au moins une aile ;
- au moins un projecteur.

Il est connu sur un tel véhicule d'indexer chaque aile avant suivant des directions transversales et verticales sur une pièce connue sous le nom de doublure d'aile avant. L'aile est indexée suivant la direction longitudinale sur le côté de l'habitacle. Le projecteur est indexé suivant les directions longitudinales, transversales et verticales sur l'aile. Ainsi, c'est l'aile qui détermine la position de référence du projecteur.

Le document EP-A-1481878 décrit un véhicule selon le préambule de la revendication 1.

Il a été constaté que, pour des véhicules automobiles comportant des ailes en matière plastique, il pouvait se produire un décalage de l'aile suivant la direction transversale vers l'extérieur du véhicule pendant l'étape de mise en peinture de l'aile plastique. Ce décalage peut aller jusqu'à 2,5 mm. Ce décalage résulte de la dilatation de l'aile pendant l'étape de peinture. Le projecteur est monté après la mise en peinture de l'aile, et se trouve placé par les moyens d'indexage dans une position elle aussi décalée suivant la direction transversale vers l'extérieur du véhicule. Il en résulte qu'à certains endroits les jeux et affleurements entre d'une part l'aile et d'autre part le capot et le bouclier de pare-chocs, ne sont pas conformes aux spécifications. La qualité du véhicule perçue par les utilisateurs n'est, de ce fait, pas bonne.

La présente invention a donc pour objet un véhicule automobile et un procédé dans lequel les jeux et affleurements au moins entre le capot et l'aile soient meilleurs.

Cet objet est atteint, selon l'invention grâce à un véhicule et un procédé de fabrication tel que défini dans la revendication 1 et dans la revendication 10.

Le véhicule automobile peut également présenter une ou plusieurs des caractéristiques ci-dessous, considérée(s) individuellement ou selon toutes les combinaisons techniquement possibles :
- l'élément de support est disposé par rapport à la caisse avec une faible tolérance à une position prédéterminée ;
- le véhicule comprend des moyens d'indexage du projecteur sur l'élément de support rigide suivant une direction verticale ;
- le véhicule comprend des moyens d'indexage du projecteur sur l'aile suivant une direction longitudinale ;
- le véhicule comprend des moyens d'indexage de l'aile sur la caisse suivant une direction longitudinale ;
- le véhicule comprend des moyens d'indexage de l'aile sur l'élément de support rigide suivant une direction verticale ;
- les premier et second pions sont deux éléments d'une même pièce rapportée sur le projecteur ;
- les premier et second pions sont des cylindres coaxiaux ; et
- l'aile est en une matière plastique.

Selon un second aspect, l'invention porte sur un procédé de fabrication d'un véhicule automobile présentant les caractéristiques ci-dessus, le procédé comprenant les étapes suivantes :
- fixation de l'élément de structure rigide à la caisse du véhicule ;
- indexage suivant la direction transversale de l'aile sur l'élément de structure rigide ;
- mise en peinture de l'aile ;
- indexage suivant la direction transversale du projecteur sur l'élément de structure rigide et de l'aile sur le projecteur.

D'autres caractéristiques et avantages de l'invention ressortiront de la description détaillée qui en est donnée ci-dessous à titre indicatif et nullement limitatif, en référence aux figures annexées, parmi lesquels :
- la figure 1 est une en perspective d'une partie latérale de l'avant d'un véhicule automobile ;
- la figure 2 est une vue de dessus de certains éléments du véhicule de la figure 1, montrant les positions respectives du projecteur, de l'aile et du support supérieur d'aile avant ;
- la figure 3 est une vue en perspective, de dessus, agrandie, des moyens d'indexage de l'aile sur le projecteur et du projecteur sur le support supérieur d'aile avant ; et
- la figure 4 est une vue en perspective, agrandie, de côté, des moyens d'indexage de la figure 3.

Dans la description qui va suivre, l'avant, l'arrière, la droite, la gauche, les directions longitudinales et transversales sont entendues relativement au sens de déplacement normal du véhicule.

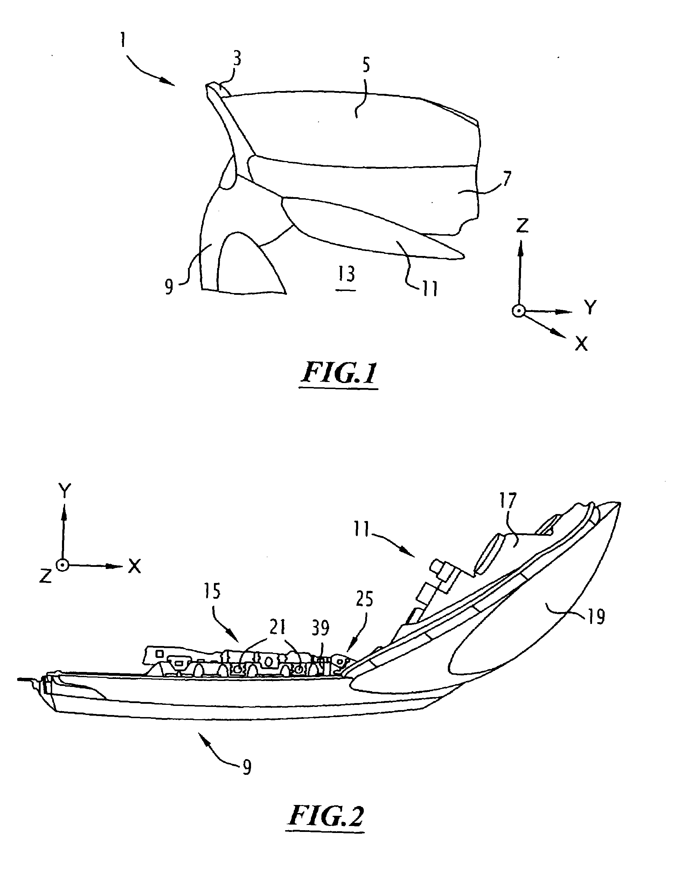

Le véhicule automobile 1 représenté partiellement sur la figure 1 comporte une caisse 3, un pare-brise 5, un capot 7, des ailes avant gauche et droite 9, des projecteurs avant gauche et droite 11 et un bouclier de pare-chocs 13.

Seul le côté latéral droit du véhicule est représenté, de telle sorte que l'aile et le projecteur gauche ne sont pas visibles sur la figure 1.

Comme le montre la figure 1, l'aile 9 est disposée sur le côté droit du véhicule et présente une orientation sensiblement verticale. L'aile 9 jouxte, vers l'arrière, l'ouverture d'accès avant droite à l'habitacle du véhicule. Elle jouxte, vers le haut, le capot 7. Vers le bas, l'aile 9 définit le logement de la roue avant droite. Vers l'avant, elle jouxte le projecteur 11 et le bouclier de pare-chocs 13.

De manière à garantir une bonne qualité perçue du véhicule, le jeu entre d'une part l'aile 9 et d'autre part le capot 7 et le bouclier de pare-chocs 13 doit être aussi réduit que possible. Par ailleurs, l'aile 9 doit affleurer le capot 7 et le bouclier de pare-chocs 13, au sens où les surfaces extérieures du capot, de l'aile et du bouclier de pare-chocs doivent être placées dans le prolongement les unes des autres, la dénivellation entre le capot 7 et l'aile 9, et entre l'aile 9 et le bouclier de pare-chocs 13, étant extrêmement réduite.

Comme le montre la figure 2, le véhicule automobile comporte des supports supérieurs d'aile avant 15 disposés l'un à droite et l'autre à gauche du véhicule. Chaque support supérieur d'aile avant est une pièce fortement rigide, réalisée par exemple en métal ou en matière composite. Un tel support est décrit par exemple dans FR-A-2 866 822. Le support 15 présente une forme allongée suivant la direction longitudinale. Il est disposé le long de l'aile, immédiatement vers l'intérieur du véhicule par rapport à celle-ci. Le support 15 est lié à la caisse du véhicule. Il est par exemple lié au longeron supérieur avant du véhicule.

Lors du montage du véhicule, l'élément de support 15 est disposé par rapport à la caisse 3 avec une faible tolérance à une position prédéterminée. En effet, on utilise pour cela par exemple des gabarits de montage. L'élément de support est ainsi placé à une position parfaitement maîtrisée et peut servir de référence pour le placement d'autres éléments du véhicule, tel que l'aile et le projecteur.

Le projecteur 11 comprend un boîtier ouvert vers l'avant 17 et une glace 19. Le boîtier 17 définit intérieurement un logement de réception des ampoules et des optiques du projecteur. Il est fermé vers l'avant par la glace 19.

De manière à garantir les positionnements respectifs du capot, de l'aile, du projecteur et du bouclier de pare-chocs, le véhicule automobile comporte différents moyens d'indexage, qui vont être détaillés ci-dessous.

Le véhicule comporte des moyens d'indexage de l'aile 9 sur la caisse 3 du véhicule suivant la direction longitudinale, ces moyens n'étant pas représentés. Le véhicule comporte également des moyens d'indexage 21, visibles sur la figure 2, de l'aile 9 sur le support 15 suivant les directions verticales et transversales. Il est à noter que ces moyens n'assurent pas une liaison rigide entre l'aile 9 et le support 15, l'aile étant susceptible de débattre au moins dans les directions longitudinales et transversales par rapport au support 15.

Les moyens 21 sont connus et ne seront donc pas décrits en détails ici.

Le véhicule comporte également des moyens 23 d'indexage du projecteur 11 sur le support 15 suivant les directions verticales et transversales. Il comporte par ailleurs des moyens 25 d'indexage du projecteur 11 sur l'aile 9 suivant une direction longitudinale, ces moyens 25 permettant en outre d'indexer l'aile 9 sur le projecteur 11 suivant la direction transversale, comme décrit plus loin.

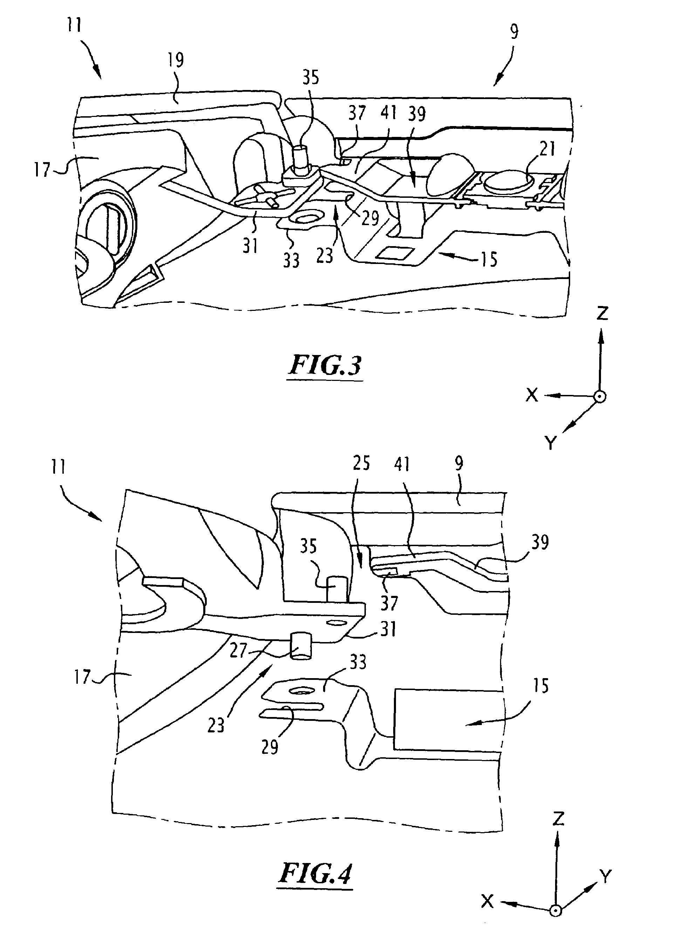

Comme le montre la figure 4, les moyens d'indexage 23 comportent un pion 27 lié au boîtier 17 du projecteur et un logement 29 de réception du pion 27 ménagé à une extrémité longitudinale avant du support 15. Le pion 27 est d'orientation verticale et pointe vers le bas. Il est venu de moulage avec le boîtier 17. Le logement 29 est ouvert vers le haut, vers le bas, et longitudinalement vers l'avant. Il est fermé transversalement vers la droite et vers la gauche et longitudinalement vers l'arrière.

Le pion 27 présente une forme sensiblement cylindrique, son diamètre correspondant sensiblement à la dimension du logement 29 suivant la direction transversale.

Le pion 27 fait saillie vers le bas par rapport à un voile plan 31 du boîtier. Le voile 31, une fois le projecteur en place sur le véhicule, s'étend sensiblement horizontalement.

L'extrémité avant 33 du support 15 dans laquelle est ménagée le logement 29 est une plaque plane sensiblement horizontale. Ainsi, le voile 31 est susceptible d'être plaqué sur une face supérieure de l'extrémité 33 avec le pion 27 engagé dans le logement 29. Les positions du projecteur suivant les directions verticales et transversales sont alors parfaitement déterminées.

Les moyens d'indexage 25 comportent un second pion 35 lié au boîtier 17 du projecteur, et un logement 37 de réception du pion 35 ménagé sur l'aile 9. Le pion 35 est d'orientation verticale et pointe vers le haut. Il est typiquement rapporté sur le voile 31 du boîtier de projecteur. Il fait saillie vers le haut par rapport à celui-ci. Le logement 37 est ménagé dans une nervure interne 39 de l'aile 9. Le logement 37 est lui aussi ouvert longitudinalement vers l'avant, et verticalement vers le haut et vers le bas. Il est fermé transversalement vers la droite et vers la gauche et longitudinalement vers l'arrière. Le pion 35 présente une forme générale cylindrique. Son diamètre est sensiblement égal à la dimension transversale du logement 37. La zone 41 de la nervure interne dans laquelle est ménagée le logement 37 est sensiblement horizontale. Ainsi, la face supérieure du voile 31 est susceptible d'être disposée contre ou en regard d'une face inférieure de la zone 41 avec le pion 35 engagé dans le logement 37. Le pion 35 est susceptible d'être engagé longitudinalement vers l'arrière jusqu'au fond du logement 37, la position longitudinale du projecteur par rapport à l'aile 9 étant ainsi déterminée.

De manière concomitante, l'engagement du pion 35 dans le logement 37 permet d'indexer transversalement l'aile 9 sur le projecteur 11.

Le second pion 35 est disposé par rapport au premier pion 27 avec une faible tolérance à une position prédéterminée. Par exemple, le second pion 35 est disposé à une position prédéterminée par rapport à la glace 19 du projecteur, celle-ci étant elle-même indexée par rapport au boîtier 17 du projecteur. On indexe ainsi la position du pion 35 par rapport au pion 27, du fait que le pion 27 est venu de moulage avec le boîtier 17.

Le procédé de fabrication du véhicule décrit ci-dessus va maintenant être détaillé.

Ce procédé comprend les étapes successives suivantes.
- Fixation des supports 15 à la caisse 3 du véhicule, par exemple aux longerons supérieurs avant du châssis.
- Indexage des ailes 9 sur le châssis 3 suivant la direction longitudinale, et indexage des ailes 9 sur les supports 15 suivant les directions transversales et verticales.
- Mise en peinture des ailes 9. Durant cette étape, il peut se produire une déformation des ailes 9, conduisant à un décalage des ailes 9 transversalement vers l'extérieur du véhicule.
- Indexage des projecteurs 11 sur les supports 15. Cette étape est réalisée en posant le voile 31 du projecteur sur la plaque 33 du support et en engageant le pion 27 dans le logement 29 correspondant.
- Indexage des projecteurs 11 sur les ailes 9 suivant la direction longitudinale, et simultanément indexage des ailes 9 sur les projecteurs 11 suivant la direction transversale.

Ces opérations d'indexage sont réalisées en engageant longitudinalement les pions 35 au fond des logements 37. Cette opération a pour effet de ramener les ailes 9 dans leur position de référence par rapport aux supports 15 et aux projecteurs 11, au cas où il se serait produit un décalage transversal vers l'extérieur du véhicule pendant l'étape de mise en peinture des ailes.

Le véhicule automobile décrit ci-dessus présente de multiples avantages.

Du fait qu'il comprend des moyens d'indexage du projecteur sur l'élément de support rigide suivant une direction transversale et des moyens d'indexage de l'aile sur le projecteur suivant la direction transversale, les jeux et affleurements de l'aile par rapport au capot et à la peau de pare-chocs sont améliorés.

En particulier, au cas où il se produirait un décalage de l'aile suivant la direction transversale vers l'extérieur du véhicule à l'étape de mise en peinture de cette aile, l'aile est ramenée à sa position transversale de référence quand le projecteur est monté sur le véhicule. En effet, la position transversale du projecteur est déterminée par celle de l'élément de support, et la position transversale de l'aile est déterminée par celle du projecteur.

Le fait que l'élément de support soit disposé par rapport à la caisse avec une faible tolérance à une position prédéterminée permet de garantir un très positionnement très précis de l'aile et du projecteur, et contribue ainsi à réduire les jeux et affleurements.

Le fait que le projecteur soit indexé sur l'aile suivant une direction longitudinale et que l'aile soit indexée sur la caisse suivant cette même direction longitudinale contribue à améliorer encore les jeux et affleurements de l'aile par rapport au projecteur et à la peau de pare-chocs.

De même, le fait que le projecteur soit indexé sur l'élément de support suivant une direction verticale et que l'aile soit également indexée sur l'élément de support suivant cette même direction verticale contribue également à réduire les jeux et affleurements de l'aile par rapport au projecteur et par rapport au capot.

Ces résultats sont obtenus à l'aide de moyens très simple, à savoir des pions et des encoches ménagés dans des pièces déjà existantes du véhicule automobile. Il est à noter que les supports supérieurs d'ailes avant ne sont pas prévus dans le véhicule spécifiquement en vue de l'indexage du projecteur et de l'aile. Cette pièce a d'autres fonctions et serait nécessaire à bord du véhicule même si l'indexage de l'aile et du projecteur était réalisé selon l'état de la technique.

Dans le véhicule décrit ci-dessus, on garantit des jeux de 3 mm plus ou moins 1,3 mm entre le capot et les ailes alors que dans l'état de la technique, le jeu nominal était de 3,5 mm plus ou moins 2,5 mm.

Le véhicule automobile peut présenter de multiples variantes.

Le pion des moyens d'indexage du projecteur sur l'élément de support rigide suivant la direction transversale et le pion des moyens d'indexage de l'aile sur le projecteur suivant la direction transversale peuvent être deux éléments d'une même pièce rapportée sur le projecteur. Ces pions peuvent par exemple être deux cylindres coaxiaux, issus d'une même pièce cylindrique engagée à travers un voile du boîtier du projecteur. De cette manière, le positionnement des deux pions l'un par rapport à l'autre est toujours parfaitement maîtrisé.

L'élément de support sur lequel est indexé le projecteur suivant la direction transversale peut ne pas être le support supérieur d'aile avant. Cet élément peut par exemple être la doublure d'aile avant. Cette solution n'est toutefois pas préférée, car la position de la doublure d'aile avant par rapport à la caisse du véhicule est maîtrisée avec moins de précision.

De même, le projecteur peut être indexé suivant la direction longitudinale non pas sur l'aile mais sur le support ou sur la doublure d'aile avant. Il peut être indexé suivant la direction verticale non pas sur le support d'aile avant mais par exemple sur la doublure d'aile avant.

De même, l'aile peut ne pas être indexée suivant la direction longitudinale sur la caisse mais sur une autre partie du véhicule. L'aile peut être indexée suivant la direction verticale non pas sur le support mais par exemple sur la caisse ou sur la doublure d'aile avant.

Les moyens d'indexage de l'aile sur le projecteur et du projecteur sur le support, suivant la direction transversale, peuvent ne pas être des pions cylindriques engagés dans des logements ouverts. Ainsi, les pions peuvent être remplacés par des reliefs de toute forme.

Les pions peuvent ne pas être portés par le boîtier de projecteur mais être ménagés l'un sur l'aile et l'autre sur l'élément de support, les encoches étant réalisées dans ce cas sur le boîtier.

Les pions ne sont pas nécessairement d'axes verticaux, ces axes pouvant être inclinés par rapport à la verticale.

Le pion des moyens d'indexage de l'aile sur le projecteur peut être venu de moulage avec le boîtier de projecteur.

L'invention a été décrite ci-dessus pour une aile avant et un projecteur avant. Toutefois, elle s'applique à une aile arrière du véhicule et à un projecteur arrière.

## Revendications

1. Véhicule automobile comprenant :
- une caisse (3) ;
- au moins un élément (15) de support latéral rigide lié à la caisse (3) ;
- au moins une aile (9) ;
- au moins un projecteur (11) ;
- des moyens (23) d'indexage du ou de chaque projecteur (11) sur le ou chaque élément de support rigide (15) au moins suivant une direction transversale, et des moyens (25) d'indexage de la ou chaque aile (9) sur le ou un projecteur (11) au moins suivant la direction transversale ;
**caractérisé en ce que** les moyens (23) d'indexage du projecteur (11) sur l'élément de support rigide (15) suivant la direction transversale comprennent un premier pion (27) lié au projecteur (11), les moyens (25) d'indexage de l'aile (9) sur le projecteur (11) suivant la direction transversale comprenant un second pion (35) lié au projecteur (11), le second pion (35) étant disposé par rapport au premier pion (27) avec une faible tolérance à une position prédéterminée.

2. Véhicule automobile selon la revendication 1, **caractérisé en ce que** l'élément de support (15) est disposé par rapport à la caisse (3) avec une faible tolérance à une position prédéterminée.

3. Véhicule automobile selon la revendication 1 ou 2, **caractérisé en ce qu'**il comprend des moyens (23) d'indexage du projecteur (11) sur l'élément de support rigide (15) suivant une direction verticale.

4. Véhicule automobile selon l'une quelconque des revendications 1 à 3, **caractérisé en ce qu'**il comprend des moyens (25) d'indexage du projecteur (11) sur l'aile (9) suivant une direction longitudinale.

5. Véhicule automobile selon l'une quelconque des revendications 1 à 4, **caractérisé en ce qu'**il comprend des moyens d'indexage de l'aile (9) sur la caisse suivant une direction longitudinale.

6. Véhicule automobile selon l'une quelconque des revendications 1 à 5, **caractérisé en ce qu'**il comprend des moyens (21) d'indexage de l'aile (9) sur l'élément de support rigide (15) suivant une direction verticale.

7. Véhicule automobile selon la revendication 1, **caractérisé en ce que** les premier et second pions (27, 35) sont deux éléments d'une même pièce rapportée sur le projecteur (11).

8. Véhicule automobile selon la revendication 1 ou 7, **caractérisé en ce que** les premier et second pions (27, 35) sont des cylindres coaxiaux.

9. Véhicule automobile selon l'une quelconque des revendications 1 à 8, **caractérisé en ce que** l'aile (9) est en une matière plastique.

10. Procédé de fabrication d'un véhicule automobile selon l'une quelconque des revendications précédentes, le procédé comprenant les étapes suivantes :
- fixation de l'élément de structure rigide (15) à la caisse (3) du véhicule ;
- indexage suivant la direction transversale de l'aile (9) sur l'élément de structure rigide (15) ;
- mise en peinture de l'aile (9) ;
- indexage suivant la direction transversale du projecteur (11) sur l'élément de structure rigide (15) et de l'aile (9) sur le projecteur (11).

## Claims

1. An automobile vehicle comprising:
- a body (3);
- at least one rigid lateral support element (15) connected to the body (3);
- at least one wing (9);
- at least one headlight (11);
- indexing means (23) of the or each headlight (11) on the or each rigid support element (15) at least following a transverse direction, and indexing means (25) of the or each wing (9) on the or each headlight (11) at least following the transverse direction;
**characterized in that** the indexing means (23) of the headlight (11) on the rigid support element (15) following the transverse direction comprise a first pin (27) connected to the headlight (11), the indexing means (25) of the wing (9) on the headlight (11) following the transverse direction comprising a second pin (35) connected to the headlight (11), the second pin (35) being arranged with respect to the first pin (27) with a small tolerance at a predetermined position.

2. The automobile vehicle according to Claim 1, **characterized in that** the support element (15) is arranged with respect to the body (3) with a small tolerance at a predetermined position.

3. The automobile vehicle according to Claim 1 or 2, **characterized in that** it comprises indexing means (23) of the headlight (11) on the rigid support element (15) following a vertical direction.

4. The automobile vehicle according to any one of Claims 1 to 3, **characterized in that** it comprises indexing means (25) of the headlight (11) on the wing (9) following a longitudinal direction.

5. The automobile vehicle according to any one of Claims 1 to 4, **characterized in that** it comprises indexing means of the wing (9) on the body following a longitudinal direction.

6. The automobile vehicle according to any one of Claims 1 to 5, **characterized in that** it comprises indexing means (21) of the wing (9) on the rigid support element (15) following a vertical direction.

7. The automobile vehicle according to Claim 1, **characterized in that** the first and second pins (27, 35) are two elements of the same piece added on the headlight (11).

8. The automobile vehicle according to Claim 1 or 7, **characterized in that** the first and second pins (27, 35) are coaxial cylinders.

9. The automobile vehicle according to any one of Claims 1 to 8, **characterized in that** the wing (9) is of a plastic material.

10. A method for the manufacture of an automobile vehicle according to any one of the preceding claims, the method comprising the following steps:
- fixing the element of rigid structure (15) to the body (3) of the vehicle;
- indexing following the transverse direction of the wing (9) on the element of rigid structure (15);
- painting of the wing (9);
- indexing following the transverse direction of the headlight (11) on the element of rigid structure (15) and of the wing (9) on the headlight (11).

## Patentansprüche

1. Kraftfahrzeug, das Folgendes aufweist:
- einen Fahrzeugaufbau (3);
- mindestens ein seitliches, starres Tragelement (15), das mit dem Fahrzeugaufbau (3) verbunden ist;
- mindestens einen Flügel (9);
- mindestens einen Scheinwerfer (11);
- Mittel zum Positionieren (23) des oder jedes Scheinwerfers (11) auf dem oder jedem starren Tragelement (15) mindestens entlang einer Querrichtung, und Mittel zum Positionieren (25) des oder jedes Flügels (9) auf dem oder einem Scheinwerfer (11) mindestens entlang der Querrichtung;
**dadurch gekennzeichnet, dass** die Mittel zum Positionieren (23) des Scheinwerfers (11) auf dem starren Tragelement (15) entlang der Querrichtung einen ersten Stift (27) aufweisen, der mit dem Scheinwerfer (11) verbunden ist, wobei die Mittel zum Positionieren (25) des Flügels (9) auf dem Scheinwerfer (11) entlang der Querrichtung einen zweiten Stift (35), der mit dem Scheinwerfer (11) verbunden ist, aufweisen, wobei der zweite Stift (35) in Bezug zu dem ersten Stift (27) mit einer geringen Toleranz zu einer vorbestimmten Position angeordnet ist.

2. Kraftfahrzeug nach Anspruch 1, **dadurch gekennzeichnet, dass** das Tragelement (15) in Bezug zu dem Fahrzeugaufbau (3) mit einer geringen Toleranz zu einer vorbestimmten Position angeordnet ist.

3. Kraftfahrzeug nach Anspruch 1 oder 2, **dadurch gekennzeichnet, dass** es Mittel zum Positionieren (23) des Scheinwerfers (11) auf dem starren Tragelement (15) entlang einer vertikalen Richtung aufweist.

4. Kraftfahrzeug nach einem der Ansprüche 1 bis 3, **dadurch gekennzeichnet, dass** es Mittel zum Positionieren (25) des Scheinwerfers (11) auf dem Flügel (9) entlang einer Längsrichtung aufweist.

5. Kraftfahrzeug nach einem der Ansprüche 1 bis 4, **dadurch gekennzeichnet, dass** es Mittel zum Positionieren des Flügels (9) auf dem Fahrzeugaufbau entlang einer Längsrichtung aufweist.

6. Kraftfahrzeug nach einem der Ansprüche 1 bis 5, **dadurch gekennzeichnet, dass** es Mittel zum Positionieren (21) des Flügels (9) auf dem starren Tragelement (15) entlang einer vertikalen Richtung aufweist.

7. Kraftfahrzeug nach Anspruch 1, **dadurch gekennzeichnet, dass** der erste und der zweite Stift (27, 35) zwei Elemente eines gleichen Teils sind, das an dem Scheinwerfer (11) angebaut ist.

8. Kraftfahrzeug nach Anspruch 1 oder 7, **dadurch gekennzeichnet, dass** der erste und der zweite Stift (27, 35) koaxiale Zylinder sind.

9. Kraftfahrzeug nach einem der Ansprüche 1 bis 8, **dadurch gekennzeichnet, dass** der Flügel (9) aus einem Plastik besteht.

10. Verfahren zum Herstellen eines Kraftfahrzeugs nach einem der vorhergehenden Ansprüche, wobei das Verfahren die folgenden Schritte aufweist:
- Befestigen des starren Strukturelements (15) an dem Aufbau (3) des Fahrzeugs;
- Positionieren entlang der Querrichtung des Flügels (9) auf dem starren Strukturelement (15);
- Lackieren des Flügels (9);
- Positionieren entlang der Querrichtung des Scheinwerfers (11) auf dem starren Strukturelement (15) und des Flügels (9) auf dem Scheinwerfer (11).
